# EUROPEAN PATENT APPLICATION

(11) **EP 1 605 178 A2**
(43) Date of publication of application: **14.12.2005**
(21) Application number: 05253521.8
(22) Date of filing: 08.06.2005
(51) Int. Cl.: F16D 1/076

(54) **Flange assembly for supporting a bearing and an end fitting in a driveshaft assembly**

(30) Priority: 09.06.2004 US 578412 P
(71) Applicant: DANA CORPORATION, Toledo, OH 43615 (US)
(72) Inventor: Breese, Douglas E., Walbridge, Ohio 43465 (US)
(74) Representative: Giles, Ashley Simon

(57) **Abstract**

A driveshaft assembly (56) includes a driveshaft tube (92) and a flange assembly (10) connected to the driveshaft tube. The flange assembly includes a flange (12) having a pilot surface (22) and a bearing seat surface (26) that are positioned concentric with one another. An end fitting (20) is secured to the flange. The end fitting (20) includes a surface that cooperates with the pilot surface (22) to position the end fitting (20) relative to the flange (12). A bearing assembly (30) supports the flange and the driveshaft tube (92) for rotation. The bearing assembly includes a surface that cooperates with the bearing seat surface (26) to position the bearing assembly (30) relative to the flange (12).

## Description

### BACKGROUND OF THE INVENTION

This invention relates in general to driveshaft assemblies, such as are commonly used in vehicular drive train systems. In particular, this invention relates to a flange assembly for supporting a bearing and an end fitting in such a driveshaft assembly so as to minimize the amount of axial misalignment therebetween.

Drive train systems are widely used for generating power from a source and for transferring such power from the source to a driven mechanism. Frequently, the source generates rotational power, and such rotational power is transferred from the source to a rotatably driven mechanism. For example, in most land vehicles in use today, an engine/transmission assembly generates rotational power, and such rotational power is transferred from an output shaft of the engine/transmission assembly through a driveshaft assembly to an input shaft of an axle assembly so as to rotatably drive the wheels of the vehicle. To accomplish this, a typical driveshaft assembly includes a hollow cylindrical driveshaft tube having a pair of end fittings, such as a pair of tube yokes, secured to the front and rear ends thereof. The front end fitting forms a portion of a front universal joint that connects the output shaft of the engine/transmission assembly to the front end of the driveshaft tube. Similarly, the rear end fitting forms a portion of a rear universal joint that connects the rear end of the driveshaft tube to the input shaft of the axle assembly. The front and rear universal joints provide a rotational driving connection from the output shaft of the engine/transmission assembly through the driveshaft tube to the input shaft of the axle assembly, while accommodating a limited amount of angular misalignment between the rotational axes of these three shafts.

In some vehicles, the distance separating the engine/transmission assembly and the axle assembly is relatively short. For these vehicles, the driveshaft assembly can be formed from a single, relatively long driveshaft tube having the first and second end fittings secured to the ends thereof. In other vehicles, however, the distance separating the engine/transmission assembly and the axle assembly is relatively long, making the use of a single driveshaft tube impractical. For these vehicles, the driveshaft assembly can be formed from a plurality (typically two) of separate, relatively short driveshaft tubes. In a compound driveshaft assembly such as this, a first end of the first driveshaft tube is connected to the output shaft of the engine/transmission assembly by a first universal joint, a second end of the first driveshaft tube is connected to a first end of the second driveshaft tube by a second universal joint, and a second end of the second driveshaft tube is connected to the input shaft of the axle assembly by a third universal joint.

A compound driveshaft assembly that is composed of two or more separate driveshaft tubes usually requires the use of a support structure for rotatably supporting the intermediate portions thereof during use. A typical intermediate support structure for a driveshaft assembly (typically referred to as a center bearing assembly) includes an annular bearing having an inner race that engages one of the driveshaft tubes and an outer race that supports the inner race for rotation relative thereto. The outer race of the annular bearing is supported within a generally annular support member that is usually formed from a relatively resilient material, such as rubber. The resilient support member is, in turn, supported within a rigid bracket that is secured to a support surface provided on the vehicle. Thus, the center bearing assembly functions to support the intermediate portion of the driveshaft assembly for rotation during use. Many center bearing assembly structures of this general type are known in the art.

In many known compound driveshaft assemblies, the connection between the second end of the first driveshaft tube and the second universal joint is facilitated by a midship tube shaft. A typical midship tube shaft includes a first end portion that is secured to the second end of the first driveshaft tube, such as by welding. The midship tube shaft also includes a central bearing portion that has a generally cylindrical bearing mounting surface provided thereon. The center bearing assembly is press fit or otherwise supported on the central bearing portion of the midship tube shaft. The midship tube shaft further includes a second end portion that has a plurality of external splines provided thereon. An end fitting having a plurality of internal splines cooperates with the external splines provided on the second end portion of the midship tube shaft so as to be fixed for rotation therewith. A nut or other structure can be provided to retain the end fitting on the midship tube shaft. The end fitting forms a portion of the second universal joint.

As with all mechanical structures that physically engage one another, the precise positioning of the center bearing assembly, the midship tube shaft, and the end fitting relative to one another is limited by dimensional variations in the manufacture of each of these individual components. Thus, in the above-described structure, a first predetermined tolerance for such dimensional variations exists between the center bearing assembly and the midship tube shaft. Additionally, a second predetermined tolerance for such dimensional variations exists between the external splines provided on the second end portion of the midship tube shaft and the internal splines provided on the end fitting. It has been found that in some instances, these first and second predetermined tolerances result in undesirable axial misalignments (and, as a result, rotational imbalances) when the driveshaft assembly is rotated during use. Thus, it would be desirable to provide an improved structure for such a driveshaft assembly that minimizes the amount of axial misalignment between the center bearing assembly and the end fitting.

### SUMMARY OF THE INVENTION

This invention relates to a flange assembly for supporting a bearing assembly and an end fitting in a driveshaft assembly so as to minimize the amount of axial misalignment therebetween. The driveshaft assembly includes a driveshaft tube and a flange assembly connected to the driveshaft tube. The flange assembly includes a flange having a pilot surface and a bearing seat surface that are positioned concentric with one another. An end fitting is secured to the flange. The end fitting includes a surface that cooperates with the pilot surface to position the end fitting relative to the flange. A bearing assembly supports the flange and the driveshaft tube for rotation. The bearing assembly includes a surface that cooperates with the bearing seat surface to position the bearing assembly relative to the flange.

Various objects and advantages of this invention will become apparent to those skilled in the art from the following detailed description of the preferred embodiments, when read in light of the accompanying drawings.

### BRIEF DESCRIPTION OF THE DRAWINGS

Fig. 1 is a side elevational view, partially in cross section, of a portion of a driveshaft assembly including a first embodiment of a flange assembly in accordance with this invention and a portion of an end fitting.

Fig. 2 is an end elevational view of the first embodiment of the flange assembly of Fig. 1.

Fig. 3 is a side elevational view, partially in cross section, of the driveshaft assembly illustrated in Fig. 1

Fig. 4 is a sectional elevational view of a second embodiment of a flange in accordance with this invention.

Fig. 5 is a side elevational view, partially in cross section, of the second embodiment of the flange illustrated in Fig. 4 having a conventional slinger mounted thereon.

Fig. 6 is a side elevational view of a portion of a driveshaft assembly including the second embodiment of the flange assembly illustrated in Figs. 4 and 5.

Fig. 7 is an end elevational view of the driveshaft assembly of Fig. 6.

Fig. 8 is a side view of a tube shaft that is used with the second embodiment of the flange illustrated in Fig. 4.

### DETAILED DESCRIPTION OF THE PREFERRED EMBODIMENTS

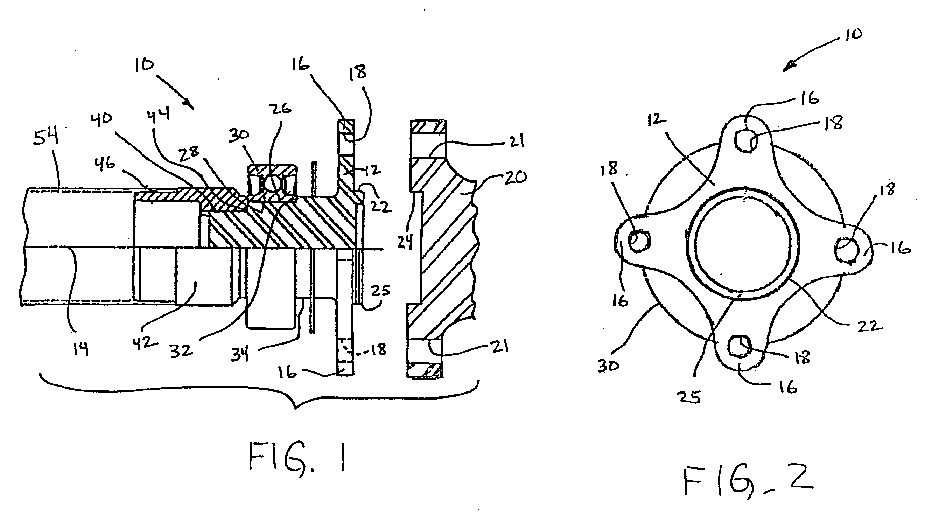

Referring now to the drawings, there is illustrated in Figs. 1, 2, and 3 a first embodiment of a flange assembly, indicated generally at 10, in accordance with this invention. The flange assembly 10 includes a flange 12 that, in the illustrated embodiment, has four arms 16 that extend generally radially from a central, longitudinal axis 14. Located at the radial outer end of each of the arms 16 is a hole 18 extending therethrough. The flange assembly also includes an end fitting, such as a flange yoke 20. The flange yoke 20 has a plurality of holes 21 formed therethrough. The holes 21 formed through the flange yoke 20 are adapted to be aligned with the holes 18 formed through the flange assembly 10. The holes 18 and 21 are sized to receive bolts (not shown) or other fasteners for connecting the flange 12 to the flange yoke 20 in a manner that is described in further detail below.

The flange yoke 12 has an axially extending male pilot surface 22 provided on one end thereof. In the illustrated embodiment, the male pilot surface 22 has an outer surface that is generally cylindrical in shape. However, the male pilot surface 22 may be formed having any desired shape. The male pilot surface 22 is sized to fit snugly within a correspondingly shaped recess 24 formed on the flange yoke 20. If desired, the axial end of the male pilot surface 22 may be provided with a beveled or chamfered surface 25 to facilitate assembly of the male pilot surface 22 of the flange 12 within the recess 24 of the flange yoke 20.

The flange 12 includes a bearing seat surface 26 that, in the illustrated embodiment, is generally cylindrical in shape. The bearing seat surface 26 is concentric with the male pilot surface 22. The bearing seat surface 26 is adapted to support an inner race 28 of an anti-friction bearing, such as a conventional center bearing assembly 30, thereon. The inner race 28 of the bearing 30 bears axially against a radial shoulder 32 that is defined between the bearing seat surface 26 and a larger diameter surface 34 provided on the flange 12. The larger diameter surface 34 extends axially between the bearing seat surface 26 and the radially extending arms 16 of the flange 12. The shoulder 32 is provided to positively position the bearing 30 in a desired axial location on the bearing seat surface 26.

The flange 12 further includes a smaller diameter support surface 40 that, in the illustrated embodiment, is generally cylindrical in shape. The smaller diameter support surface 40 extends axially from the bearing seat surface 26 in a direction opposite to the larger diameter surface 34. The smaller diameter support surface 40 is also concentric with the male pilot surface 22. The smaller diameter support surface 40 is sized to receive an inner cylindrical surface of a tube sleeve 42 that, in the illustrated embodiment, is generally hollow and cylindrical in shape. The tube sleeve 42 is assembled over the smaller diameter support surface 40 such that an end face of the tube sleeve 42 bears against a radial shoulder 44 defined between the smaller diameter support surface 40 and the bearing seat surface 26. The tube sleeve 42 can be permanently secured to the flange 12 by any desired means, such as by welding. For example, the tube sleeve 42 can be tack-welded at three angularly spaced locations about the central, longitudinal axis 14. The outer surface of the illustrated tube sleeve 42 has a cylindrical recessed area 46 provided at the end thereof that is opposite to the flange 12. The recessed area 46 is sized to receive and support an end of a driveshaft tube 54 thereon. The driveshaft tube 54 can, for example, be press fit onto the recessed area 46 and secured to the tube sleeve 42 by welding or other means.

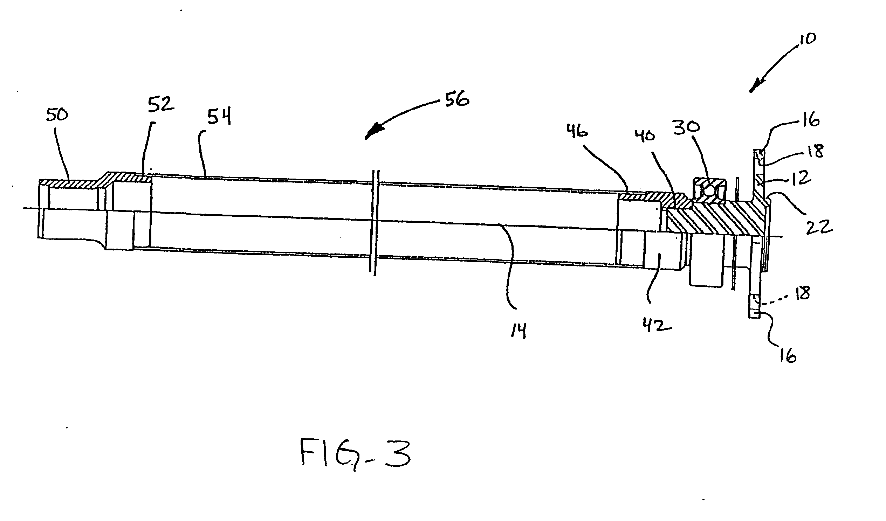

Fig. 3 illustrates a portion of a driveshaft assembly 56 that includes the above-described flange assembly 10. A first end of the driveshaft tube 54 has a conventional splined sleeve 50 secured thereto. The splined sleeve 50 has a recessed mounting surface 52, on which the second end of the driveshaft tube 54 can be supported and secured thereto by welding or other means. As discussed above, the first end of the first driveshaft tube 54 can be connected to an output shaft (not shown) of an engine/transmission assembly or any other structure by a first universal joint (not shown) by means of the splined sleeve 50. The second end of the driveshaft tube 54 can be connected to a first end of a second driveshaft tube (not shown) by a second universal joint (not shown) by means of the end fitting 20.

The run-out tolerances of the driveshaft assembly 56 are controlled by the concentricity of the male pilot surface 22, the bearing seat surface 26, and the recessed area 46 provided on the flange 12. As discussed above, the male pilot surface 22, the bearing seat surface 26, and the recessed area 46 are all formed on the flange 12, which is formed from a single piece of material. This structure avoids additional stack-up tolerances associated with conventional multiple piece flange assemblies, such as discussed above.

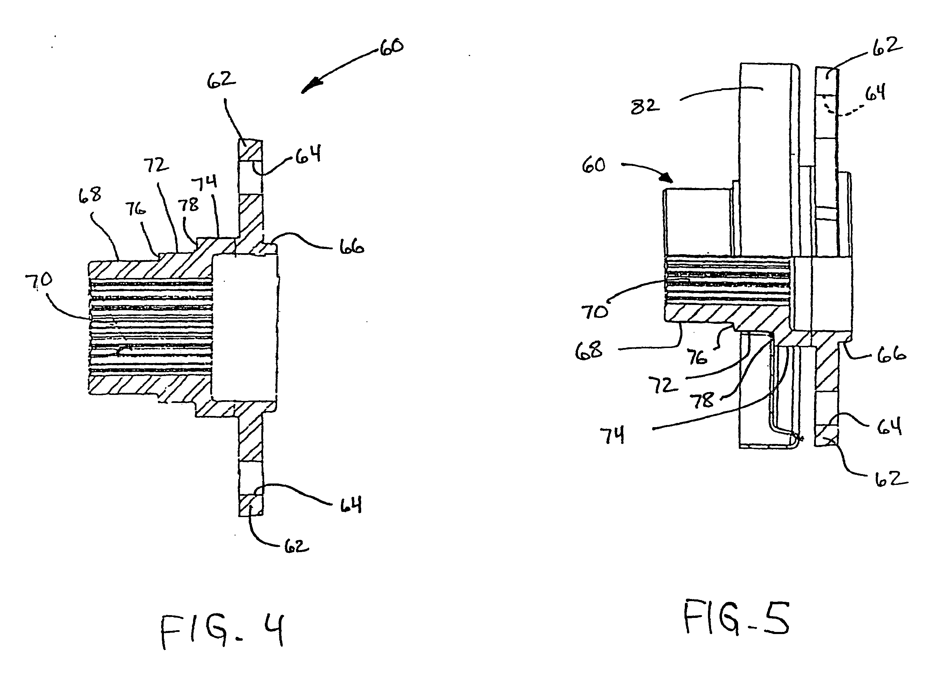

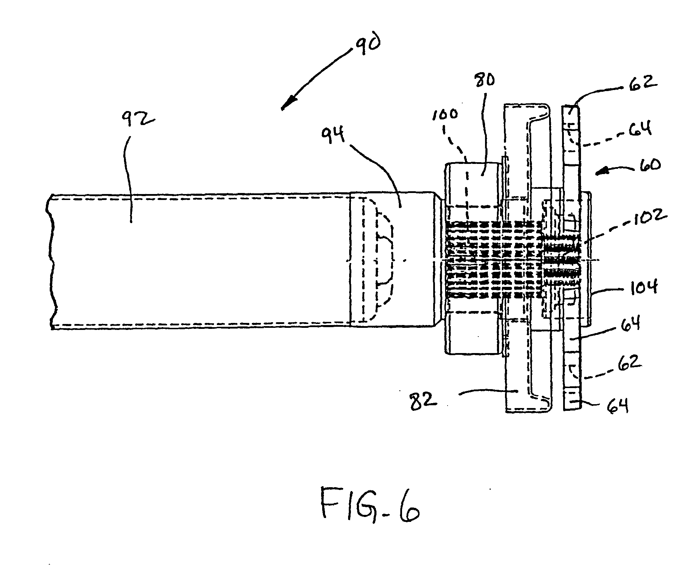

Figs. 4 and 5 illustrate a second embodiment of a flange, indicated generally at 60, in accordance with this invention. The flange 60 also includes four arms 62 extending radially from the central, longitudinal axis 14, each arm 62 having a hole 64 extending therethrough. As discussed above, the holes 64 are sized to receive bolts for connecting the flange 60 to an end fitting, such as a flange yoke 20 discussed above with reference to Figs. 1, 2, and 3. The axial face of the flange 60 is provided with an axially extending male pilot surface 66, which again can be cylindrical in shape and sized to fit within the recess 24 provided in the end fitting 20 as described above. The input flange 60 also includes a bearing seat surface 68, which again can be cylindrical in shape and support a center bearing assembly 30 as discussed above. In this second embodiment of the invention, the flange 60 has an internal surface having a plurality of axially extending splines 70 provided thereon. The male pilot surface 66 and the bearing seat surface 68 are concentric with the splines 70, as described above. Thus, the male pilot surface 66, the bearing seat surface 68, and the splines 70 are co-axially aligned on the flange 60.

The outer surface of the flange 60 is provided with two additional cylindrical surfaces 72 and 74 that, together with the bearing support surface 68, define respective radial shoulders 76 and 78. The first shoulder 76 is defined between the bearing support surface 68 and the first cylindrical surface 72 and is provided for axially locating an anti-friction bearing (not shown) in the manner described above. The second shoulder 78 is defined between the first cylindrical surface 72 and the second cylindrical surface 74 and for axially locating a slinger 82 thereon. The slinger 82 is conventional in the art and is provided to shield the center bearing 30 against contamination from dirt and damage from foreign objects. Weights for dynamically balancing the driveshaft assembly can be also welded to a surface of the slinger 82 if desired.

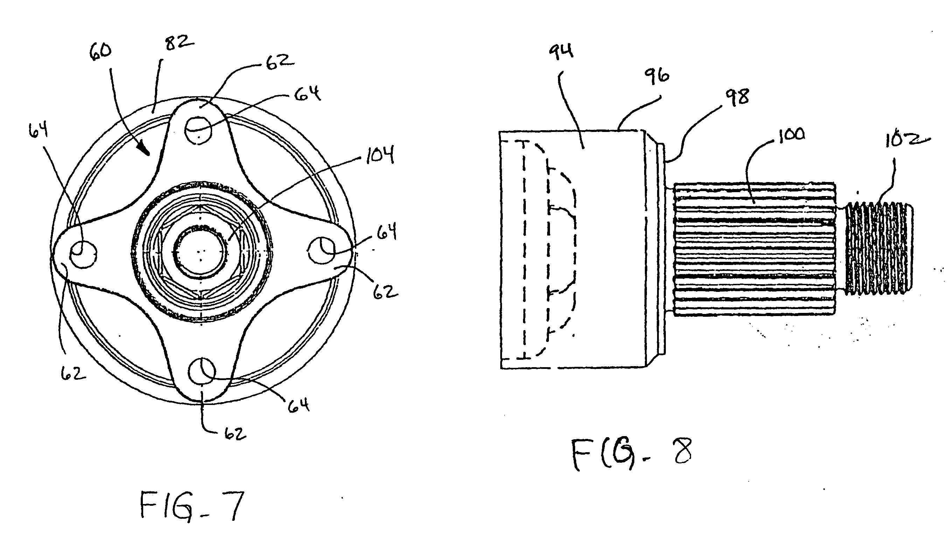

As shown in Figs. 6, 7, and 8, a driveshaft assembly 90 includes a driveshaft tube 92, a tube shaft 94 and the flange 60. The driveshaft tube 92 can be secured to the tube shaft 94 by any conventional means, such as by welding. The illustrated tube shaft 94 is generally cylindrical in shape and includes a cylindrical outer surface 96, a radial shoulder 98, and an externally splined portion 100. The cylindrical outer surface 96 and the externally splined portion 100 are co-axial with one another and with the central longitudinal axis of the driveshaft assembly 90. An externally threaded protrusion 102 extends co-axially from the externally splined portion 100 for a purpose that will be explained below.

During assembly, the center bearing assembly 30 is initially press fit or otherwise supported on the bearing support surface 68 of the flange. Then, the flange 60 is inserted about the tube shaft 94 such that the internal splines 70 provided on the flange 60 cooperate with the external splines 100 provided on the tube shaft 94. The axial end face of the flange 60 can abut the radial shoulder 98 provided on the tube shaft 94 to precisely position the flange 60 and the tube shaft 98 relative to one another. When so assembled, the threaded protrusion 102 of the tube shaft 94 is positioned with the flange 60. A pinion nut 104 or other structure can be threaded onto the threaded protrusion 102 to positively retain the flange 60 and the tube shaft 94 together as an assembly.

The run-out tolerances of the driveshaft assembly 90 are controlled by the concentricity of the male pilot surface 66 and the bearing seat surface 68 provided on the flange 12. As discussed above, the male pilot surface 66 and the bearing seat surface 68 are all formed on the flange 60, which is formed from a single piece of material. This structure avoids additional stack-up tolerances associated with conventional multiple piece flange assemblies, such as discussed above.

In accordance with the provisions of the patent statutes, the principle and mode of operation of this invention have been explained and illustrated in its preferred embodiments. However, it must be understood that this invention may be practiced otherwise than as specifically explained and illustrated without departing from its spirit or scope.

## Claims

1. A flange assembly for use in a driveshaft assembly comprising:
a flange including a pilot surface and a bearing seat surface that are positioned concentric with one another;
an end fitting secured to said flange, said end fitting including a surface that cooperates with said pilot surface to position said end fitting relative to said flange; and
a bearing assembly supporting said flange for rotation, said bearing assembly including a surface that cooperates with said bearing seat surface to position said bearing assembly relative to said flange.

2. The flange assembly defined in Claim 1 wherein said pilot surface is a male pilot surface, and wherein said end fitting surface is a recess formed in said end fitting.

3. The flange assembly defined in Claim 1 wherein said pilot surface and said end fitting surface are generally cylindrical in shape.

4. The flange assembly defined in Claim 1 wherein said flange includes a plurality of arms, each having an opening formed therethrough, and wherein said end fitting has a plurality of openings formed therethrough that are aligned with said flange openings.

5. The flange assembly defined in Claim 1 wherein said flange further includes a support surface that is concentric with said pilot surface and said bearing seat surface.

6. The flange assembly defined in Claim 5 further including a tube seat that is supported on said support surface of said flange.

7. The flange assembly defined in Claim 6 wherein said tube seat includes a recessed area that is adapted to support an end of a driveshaft tube thereon.

8. The flange assembly defined in Claim 1 wherein said flange includes a plurality of splines.

9. The flange assembly defined in Claim 1 further including a tube shaft having a plurality of splines that cooperate with said plurality of splines on said flange.

10. A flange assembly defined in Claim 1 further including a driveshaft tube that is connected to said flange assembly.
